# EUROPEAN PATENT APPLICATION

(11) **EP 3 671 714 A1**
(43) Date of publication of application: **24.06.2020**
(21) Application number: 18215389.0
(22) Date of filing: 21.12.2018
(51) Int. Cl.: G09G 3/34, G06F 3/147

(54) **A SOLUTION FOR OPTIMIZING LIGHTING CONDITIONS WITHIN AN OPERATING ENVIRONMENT OF A MOBILE TERMINAL**

(71) Applicant: Helvar Oy Ab, 02150 Espoo (FI)
(72) Inventor: JUSLÉN, Henri, 02150 ESPOO (FI); MATEOS, Adrian, 02150 ESPOO (FI)
(74) Representative: Berggren Oy, Helsinki & Oulu

(57) **Abstract**

The invention relates to a method for optimizing lighting conditions within an operating environment of a mobile terminal (200). In the method mobile terminal related data and lighting related data are obtained (102) from one or more sensor devices of the mobile terminal, at least one lighting value representing incident light at an observation location (302) representing a location of the eyes of a user of the mobile terminal is defined (104) based on the obtained mobile terminal related data and lighting related data, the defined at least one lighting value is compared (106) to pre-defined limits, and in response to detecting that at least one lighting value deviates from the pre-defined limits, at least one control function is generated (108). The invention relates also to a computer program product (618) and a mobile terminal (200) performing at least partly the method.

## Description

### TECHNICAL FIELD

The invention concerns in general the technical field of lighting conditions. Especially the invention concerns lighting conditions within an operating environment of a mobile terminal.

### BACKGROUND

Typically, mobile terminals are used in different environments having different lighting conditions. Some examples of mobile terminals may be mobile phones, tablet computers and laptop computers among other similar. The lighting conditions may vary depending on the operating environment of the mobile terminal. For example, the mobile terminal may be used outdoors, inside different buildings, etc., each having different lighting conditions. Furthermore, the lighting conditions of the operating environment of the mobile terminal may depend on time of the day and/or time of the year. Because of the varying lighting conditions, the mobile terminals are frequently used in poor lighting conditions, such as in too dark lighting conditions, in too bright lighting conditions, the type of light may be wrong, the user may experience glare, etc.

The use of the mobile terminal in poor lighting conditions may lead for example to disturbance of circadian rhythm of the user of the mobile terminal and/or increased risk of eye diseases and/or myopia of the user of the mobile terminal. The circadian rhythm means 24-hour cycle that tells a human body when to sleep, rise and eat. The circadian rhythm regulates many physiological processes in human body and it may be affected by environmental factors, such as light and temperature, and it determines whether one feels wide-awake and energized or tired and depleted at different times of the day.

Typically, the mobile terminals are capable to adjust the brightness of the screen of the device at different lighting conditions, e.g. manually by the user of the mobile terminals. Furthermore, the mobile terminals may be capable to reduce the amount of blue light originating from the screen of the mobile terminal. For example, the mobile terminal may be configured to turn on a blue light blocking function, for example at certain times based on the clock of the mobile terminal. Alternatively or in addition, the blue light blocking function may be turned on manually by the user of the mobile terminal. However, the present solutions do not allow taking into account environmental conditions, such as ambient light.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a method, computer program product, and a mobile terminal for optimizing lighting conditions within an operating environment of a mobile terminal. Another objective of the invention is that the method, the computer program product, and the mobile terminal for optimizing lighting conditions within an operating environment of a mobile terminal improve lighting conditions within the operating environment of the mobile terminal.

The objectives of the invention are reached by a method, a computer program, and a mobile terminal as defined by the respective independent claims.

According to a first aspect, a method for optimizing lighting conditions within an operating environment of a mobile terminal is provided, wherein the method comprising: obtaining mobile terminal related data and lighting related data from one or more sensor devices of the mobile terminal, defining at least one lighting value representing incident light at an observation location representing a location of the eyes of a user of the mobile terminal based on the obtained mobile terminal related data and lighting related data, comparing the defined at least one lighting value to pre-defined limits, and generating at least one control function, in response to detecting that at least one lighting value deviates from the pre-defined limits.

The lighting related data may comprise at least one of the following: amount, color temperature and/or illuminance of light reaching a first side of the mobile terminal; amount, color temperature and/or illuminance of light reaching a second side of the mobile terminal being opposite to the first side.

The mobile terminal related data may comprise at least one of the following: position of the mobile terminal, location of the mobile terminal, distance from the mobile terminal to the observation location, brightness of a screen of the mobile terminal, spectrum of light originating from a screen of the mobile terminal.

The at least one lighting value may be at least one of the following: total amount of incident light, amount of incident light originating from a screen of the mobile terminal, amount of incident light originating from the ambient of the mobile terminal, spectrum of incident light, balance of incident light between light originating from a screen of the mobile terminal and light originating from the ambient of the mobile terminal.

The control function may comprise an instruction for the mobile terminal itself to slow down at least one function of the mobile terminal.

Alternatively or in addition, the control function may comprise an instruction for the mobile terminal itself to switch off at least one function of the mobile terminal.

Alternatively or in addition, the control function may comprise an indication via an output device of the mobile terminal for the user that the at least one lighting value deviates from pre-defined limits.

Alternatively or in addition, the control function may comprise an instruction via an output device of the mobile terminal for the user to adjust the lighting conditions within the operating environment of the mobile terminal.

The method may further comprise storing the obtained mobile terminal related data and lighting related data together with time-based location of the mobile terminal at the observation time.

The method may further comprise, in response to detecting that the defined at least one lighting value deviates from pre-defined limits, defining a location having better lighting conditions based on the stored mobile terminal related data and lighting related data together with time-based location of the mobile terminal; and the control function may comprise an instruction via an output device of the mobile terminal for the user to move to the defined location having better lighting conditions.

Alternatively or in addition, the control function may be generated for a lighting control system of a building and comprises instruction to adjust ambient lighting conditions.

The method may further comprise receiving from the lighting control system lighting related data comprising at least one of the following: lighting level data at different locations within the building, presence data at different locations within the building, spectrum of the light.

According to a second aspect, a computer program product is provided, wherein the computer program product comprises one or more sets of machine-readable instructions that, when executed by one or more processors of a mobile terminal, are configured to cause: obtaining mobile terminal related data and lighting related data, defining at least one lighting value representing incident light at an observation location representing a location of the eyes of a user of the mobile terminal based on the obtained mobile terminal related data and lighting related data, comparing the defined at least one lighting value to pre-defined limits, and generating at least one control function, in response to detecting that at least one lighting value deviates from the pre-defined limits.

According to a third aspect, a mobile terminal is provided, wherein the mobile terminal comprising: one or more sensor devices for obtaining mobile terminal related data and lighting related data, one or more processors, and one or more memories comprising computer program code, wherein the one or more memories and the computer program code are configured to, with the one or more processors, cause the mobile terminal to perform: define at least one lighting value representing incident light at an observation location representing a location of the eyes of a user of the mobile terminal based on the obtained mobile terminal related data and lighting related data, compare the defined at least one lighting value to pre-defined limits, and generate at least one control function, in response to detecting that at least one lighting value deviates from the pre-defined limits.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates an example of a method according to the invention.
Figures 2A-2C illustrate examples of a mobile terminal according to the invention.
Figure 3A illustrates an example of a reference distance between a mobile terminal and an observation location.
Figure 3B illustrates an example of a distance between a mobile terminal and an observation location.
Figure 4 illustrates another example of a method according to the invention.
Figure 5 illustrates a simplified example of an environment, wherein one or more embodiments of the invention may be implemented.
Figure 6 schematically illustrates an example of a mobile terminal according to the invention.

### DESCRIPTION OF THE EXEMPLIFYING EMBODIMENTS

Mobile terminals 200 may be used within different environments and the lighting conditions may vary depending on the operating environment of the mobile terminal. Some non-limiting examples of mobile terminals 200 may be mobile phones, tablet computers and laptop computers, etc. With the term "operating environment of the mobile terminal" is meant throughout this application a prevailing environment in which the mobile terminal 200 is used, especially a screen of the mobile terminal is in use, i.e. the screen 204 of the mobile terminal 200 is on and viewed by a user of the mobile terminal 200. When the screen 204 of the mobile terminal is on, light is originating from the screen 204 of the mobile terminal 200 into the environment of the mobile terminal.

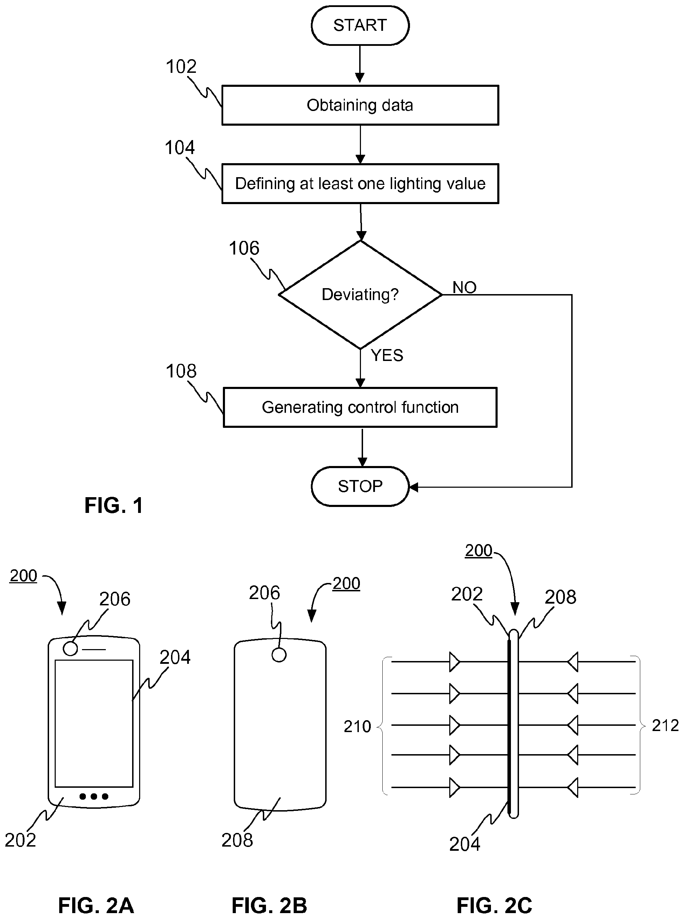

Next an example of the method according to the invention is described by referring to Figure 1. Figure 1 schematically illustrates the invention as a flow chart. At the step 102 mobile terminal related data and lighting related data are obtained from one or more sensor devices of the mobile terminal 200. Some non-limiting examples of sensor device of the mobile terminal 200 may be one or more cameras, one or more Global Positioning System (GPS) units, one or more acceleration sensors, one or more gyroscopes, one or more magnetometers, one or more ambient light sensors, etc. The mobile terminal related data and lighting related data may be obtained continuously or at regular or irregular intervals, e.g. once a second, every other second, once a minute, etc. Especially, the continuous obtaining of the terminal related data and lighting related data enables real-time optimization of the lighting conditions within the operating environment of the mobile terminal 200.

The lighting related data may comprise at least one of the following: amount of light reaching a first side 202 of the mobile terminal 200, color temperature of light reaching a first side 202 of the mobile terminal 200, illuminance of light reaching a first side 202 of the mobile terminal 200, amount of light reaching a second side 208 of the mobile terminal 200 being opposite to the first side 202, color temperature of light reaching a second side 208 of the mobile terminal 200 being opposite to the first side 202, illuminance of light reaching a second side 208 of the mobile terminal 200 being opposite to the first side 202. The first side 202 of the mobile terminal 200 may comprise a screen 204, e.g. a touch screen. The mobile terminal 200 may further comprise one or more sensor devices, e.g. camera and/or ambient light sensor. At least one camera and/or ambient light sensor 206 may be arranged on the first side 202 of the mobile terminal 200, i.e. on the same side of the mobile terminal 200 as the screen 204. Alternatively or in addition, at least one camera and/or at least one ambient light sensor 206 may be arranged on the second side 208 of the mobile terminal 200. The amount, color temperature and/or illuminance of light reaching the first side 202 of the mobile terminal 200 may be obtained from the at least one camera or at least one ambient light sensor 206 arranged at the first side 202 of the mobile terminal 200. The amount, color temperature and/or illuminance of light reaching the second side 208 of the mobile terminal 200 may be obtained from the at least one camera or ambient light sensor 206 arranged at the second side 208 of the mobile terminal.

Figure 2A illustrates a non-limiting example of a first side 202 of the mobile terminal 200, which is in this example a mobile phone. The first side 202 of the example mobile terminal 200 comprises a touch screen 204 and one camera 206 as a sensor device for providing lighting related data, e.g. amount, color temperature and/or illuminance of light reaching the first side 202 of the mobile terminal 200. Figure 2B illustrates a non-limiting example of a second side 208 of the mobile terminal 200, which is in this example a mobile phone. The second side 208 of the example mobile terminal 200 comprises one camera 206 as a sensor device for providing lighting related data, e.g. amount, color temperature and/or illuminance of light reaching the second side 208 of the mobile terminal 200 being opposite to the first side 202. In the examples of Figures 2A and 2B the at least one sensor device is camera, but the invention is not limited to that and the at least one sensor device may also be at least one ambient light sensor. Figure 2C illustrates a simple non-limiting example of light 210 reaching the first side 202 of the mobile terminal 200 and light 212 reaching the second side 208 of the mobile terminal 200. In the example of Figure 2C the light 210, 212 is illustrated with horizontal rays of light, however the light 210, 212 may arrive to the first side 202 of the mobile terminal 200 and/or to the second side 208 of the mobile terminal 200 also from any other angle or a combination of different angles.

The mobile terminal related data may comprise at least one of the following: position of the mobile terminal 200, location of the mobile terminal 200, distance from the mobile terminal 200 to an observation location 302 representing the location of the eyes of the user of the mobile terminal 200, brightness of the screen 204 of the mobile terminal 200, spectrum of light originating from the screen 204 of the mobile terminal 200. The position of the mobile terminal 200 may be obtained from one or more acceleration sensors, one or more magnetometers, and/or one or more gyroscopes of the mobile terminal 200. The position of the mobile terminal 200 may be obtained as an absolute position, i.e. orientation, of the mobile terminal 200 and/or as a position in relation to the user of the mobile terminal 200. The location of the mobile terminal 200 may be obtained from one or more GPS units of the mobile terminal 200. The brightness of the screen 204 of the mobile terminal 200 and the spectrum of light originating from the screen 204 of the mobile terminal 200 may be obtained from one or more ambient light sensors of the mobile terminal 200. The one or more ambient light sensors may be arranged to the first side 202 of the mobile terminal 200. As the mobile terminal 200 is typically used so that the first side 202 of the mobile terminal 200, i.e. the side comprising the screen 204, is facing to the eyes of the user of the mobile terminal 200 when the screen 204 is in use, i.e. viewed by the user of the mobile terminal 200, the distance from the mobile terminal 200 to the observation location 302 representing the location of the eyes of the user of the mobile terminal 200 may be defined by means of one or more cameras 206 of the mobile terminal 200 arranged on the first side 202 of the mobile terminal 200.

Next one example to define the distance from the mobile terminal 200 to the observation location 302 representing the location of the eyes of the user of the mobile terminal 200 is described, but the invention is not limited to that and the distance may be defined also by using other methods. First the mobile terminal 200 is arranged at a pre-defined reference distance from the eyes of the user of the mobile terminal 200, i.e. reference screen to eyes distance, and at least one reference picture is captured with the one or more cameras 206 of the mobile terminal 200 arranged on the first side of the mobile terminal 200. From the reference picture a reference distance between the eyes of the user, i.e. reference eye to eye distance, at the reference screen to eyes distance may be defined. The reference eye to eye distance is user specific and needs to be defined separately to each user of the mobile terminal 200. After capturing the reference picture, the distance from the mobile terminal 200 to the observation location 302 may be defined continuously. To define a distance from the mobile terminal 200 to the observation location 302, i.e. screen to eyes distance, the following steps may be performed:
1) capturing a picture with the one or more cameras 206 of the mobile terminal 200 arranged on the first side of the mobile terminal 200,
2) detecting from the captured picture the face and eyes of the user,
3) defining eye to eye distance from the captured picture,
4) defining the screen to eyes distance based on defined eye to eye distance, the reference eye to eye distance, reference screen to eyes distance, and
5) averaging the screen to eyes distance by capturing at least five successive pictures (optional step).

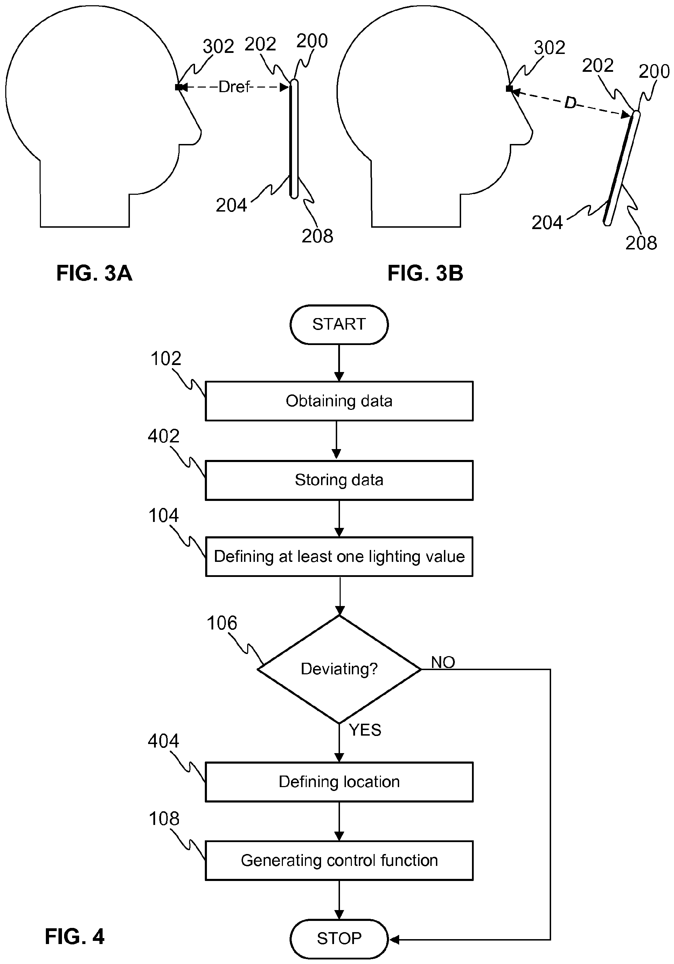

As the one or more cameras 206 of the mobile terminal 200 arranged on the first side of the mobile terminal 200 are substantially on the same plane with the screen 200 of the mobile terminal 200, the distance between the screen and the observation location 302, i.e. screen to eyes distance, may be considered to be the same as the distance between the camera and the observation location 302. Figure 3A illustrates an example of the reference distance D_{ref} between the mobile terminal 200 and the observation location 302, i.e. the reference screen to eyes distance, when the screen 204 of the mobile terminal 200 is in use, e.g. the screen 204 is viewed by the user of the mobile terminal 200. Figure 3B illustrates an example of the distance D between the mobile terminal 200 and the observation location 302, i.e. the screen to eyes distance, when the screen 204 of the mobile terminal 200 is in use, e.g. the screen 204 is viewed by the user of the mobile terminal 200.

At the step 104, at least one lighting value representing light reaching eyes of the user of the mobile terminal 200 is defined based on the obtained mobile terminal related data and lighting related data. The light reaching the eyes of the user of the mobile terminal 200 corresponds to incident light at the observation location 302 representing the location of eyes of the user of the mobile terminal 200 at the observation time. The at least one lighting value may be at least one of the following: total amount of incident light, amount of incident light originating from the screen 204 of the mobile terminal 200, amount of incident light originating from the ambient of the mobile terminal 200, spectrum of incident light, balance of incident light between light originating from a screen 204 of the mobile terminal 200 and light originating from the ambient of the mobile terminal 200. The total amount of incident light at the observation location 302 comprises the amount of light originating from the screen 204 of the mobile terminal 200, i.e. the light coming from the screen 204 of the mobile terminal 200 to the observation location 302, together with the amount of light originating from the ambient of the mobile terminal 200, i.e. the light coming from the environment of the mobile terminal 200 to the observation location 302.

At the step 106 the defined at least one lighting value is compared to pre-defined limits. In response to detecting that at least one lighting value deviates from the pre-defined limits, at least one control function is generated at the step 108. The at least one control function enables that the lighting conditions within the operating environment of the mobile terminal 200 may be optimized. Individual pre-defined limits may be defined for each of the at least one lighting value. Moreover, pre-defined limits for different lighting values may be combined. The pre-defined limits may vary depending on the time of the day. This enables that the pre-defined limits may be defined to be higher in the morning, when more light is needed, and lower in the evening, when less light is preferable, to maintain the circadian rhythm. Furthermore, the pre-defined limit for the spectrum of the incident light may be defined so that in the evening the wavelengths of the blue light are limited outside. Alternatively or additionally, the pre-defined limits may be constant through the day.

The pre-defined limits for total amount of incident light, amount of incident light originating from the screen 204 of the mobile terminal 200 and amount of incident light originating from the ambient of the mobile terminal 200 may be defined in lux or in Equivalent Melanopic Lux (EML). EML is a metric for measuring the biological effects of light. The amount of light in EML may be defined by multiplying the amount of light in lux by a melanopic ratio. The melanopic ratio depends on the used light source, e.g. the melanopic ratio is for 2700 Kelvin light-emitting diode (LED) light 0.45, for 4000 Kelvin LED light 0.76, and for daylight 1.10.

For the total amount of incident light, the amount of incident light originating from the screen 204 of the mobile terminal 200 and amount of incident light originating from the ambient of the mobile terminal 200 the pre-defined limits are preferably minimum limits and if the defined value is less than the defined minimum limit, at least one control function is generated. Preferably, these minimum limits may be defined to be e.g. between 20 and 300 lux, depending on e.g. that are the limits constant or varying depending on the time of the day. For the spectrum of incident light, the pre-defined limit may be such that certain wavelengths, e.g. blue light may be limited outside. For the balance of incident light, the predefined limits may be minimum and/or maximum limits and if the balance is out of the range defined by the minimum and maximum limits, i.e. less than the defined minimum limit or more than the defined maximum limit, at least one control function is generated.

According to a non-limiting example, irrespective of the time of the day the predefined limit for the minimum amount of incident light originating from the ambient of the mobile terminal 200 may be defined to be e.g. 20 lux, i.e. if the amount of incident light originating from the ambient of the mobile terminal 200 is detected to be less than 20 lux, at least one control function is generated. According to another non-limiting example, in the morning the pre-defined limit for minimum total amount of incident light may be defined to be e.g. 200 lux or 150 EML, i.e. if the total amount of incident light is detected to be less than 200 lux or 150 EML, at least one control function is generated. According to another non-limiting example, in the evening the pre-defined limit for the spectrum of light may be defined to be less than 430 nanometers and more than 520 nanometers meaning that the wavelengths of blue light (430-520 nanometers) are limited outside, i.e. if the spectrum of the incident light is between 430-520 nanometers, at least one control function is generated.

Furthermore, the pre-defined limits may further comprise a time limit, i.e. if the at least one lighting value is detected to deviate from the pre-defined limits longer than a pre-defined time limit, the at least one control function is generated. According to a non-limiting example, the pre-defined limit for the minimum amount of incident light originating from the ambient of the mobile terminal 200 may be defined to be e.g. 20 lux and the time limit may be defined to be e.g. three minutes, i.e. if the amount of incident light originating from the ambient of the mobile terminal 200 is detected to be less than 20 lux more than three minutes, at least one control function is generated. The time limit is especially advantageous when the pre-defined limits are defined to be constant though the day.

The above presented examples for the predefined limits are only non-limiting examples and the pre-defined limits may have also other values.

The pre-defined limits may be adjustable, i.e. the user of the mobile terminal may adjust the pre-defined limits, e.g. based on individual sleep rhythm, work shifts, circadian rhythm, etc. of the user. Alternatively or in addition, the predefined limits may have a default value defined based on typical limit values for the lighting values.

The generated at least one control function may comprise an instruction for the mobile terminal 200 itself to slow down at least one function of the mobile terminal 200. According to one non-limiting example, in response to detecting that at least one lighting value deviates from the pre-defined limits, the mobile terminal 200 may be configured to slow down a wireless communication connection, e.g. mobile data, Wi-Fi, etc., causing that one or more software applications, e.g. mobile applications, running on the mobile terminal 200 at that moment and using the wireless communication connection are slowed down. The slowing down of at least one function of the mobile terminal 200 indicates for the user of the mobile terminal 200 that the lighting conditions within the operating environment of the mobile terminal 200 are poor, i.e. below the recommended lighting conditions and may cause direct or indirect unhealthy consequences for the user of the mobile terminal 200 at least in the long term. Furthermore, after slowing down the at least one function of the mobile terminal, the mobile terminal 200 may maintain the slow running speed of the at least one slowed down function until the at least one lighting value is detected to be again within the pre-defined limits. In other words, the method may further comprise that the mobile terminal 200 continues obtaining 102 the mobile terminal related data and lighting related data, defining 104 at least one lighting value, and comparing the at least one lighting value to the pre-defined limits after slowing down at least one function of the mobile terminal 200. In response to detecting that at least one lighting value is again within the pre-defined limits, the method may comprise that the mobile terminal 200 restores the running speed of the at least one slowed down function of the mobile terminal 200.

Alternatively or in addition, the at least one control function may comprise an instruction for the mobile terminal 200 itself to switch off at least one function of the mobile terminal 200. According to a non-limiting example, in response to detecting that at least one lighting value deviates from the pre-defined limits, the mobile terminal 200 may be configured to switch itself completely off. According to another non-limiting example, in response to detecting that at least one lighting value deviates from the pre-defined limits, the mobile terminal 200 may be configured to switch off one or more mobile applications, e.g. a web browser or a game, running on the mobile terminal 200 at that moment. The switching off at least one function of the mobile terminal 200 indicates for the user of the mobile terminal 200 that the lighting conditions within the operating environment of the mobile terminal 200 are poor. Furthermore, the method may further comprise that the mobile terminal 200 prevents restart of the at least one switched off function until the at least one lighting value is detected to be again within the pre-defined limits. In other words, the mobile terminal 200 may continue obtaining 102 the mobile terminal related data and lighting related data, defining 104 at least one lighting value, and comparing the at least one lighting value to the pre-defined limits after switching of at least one function of the mobile terminal 200. In response to detecting that at least one lighting value is again within the pre-defined limits, the method may further comprise that the mobile terminal 200 allows restarting of the at least one switched off function of the mobile terminal 200.

Alternatively or in addition, the at least one control function may comprise an indication via an output device of the mobile terminal, e.g. the screen, a speaker, etc., for the user that the at least one lighting value deviates from pre-defined limits. According to a non-limiting example, the indication may be a voice indication via a speaker of the mobile terminal 200. According to another non-limiting example, the indication may be a notification displayed on the screen of the mobile terminal 200.

Alternatively or in addition, the at least one control function may comprise an instruction via an output device of the mobile terminal, e.g. the screen, the speaker, etc., for the user to adjust the lighting conditions within the operating environment of the mobile terminal. According to a non-limiting example, the indication may be a voice indication via a speaker of the mobile terminal 200. According to another non-limiting example, the indication may be a notification displayed on the screen of the mobile terminal 200. The instruction may comprise for example an instruction for the user to increase light, change the position and/or location of the mobile terminal 200, increase or decrease distance to the mobile terminal 200.

As discussed above at least one control function may be generated, in response to detecting that at least one lighting value deviates from the pre-defined limits, i.e. the generated at least one control function may comprise one or more of the above discussed indications and/or instructions. Combination of multiple indications and/or instructions may increase the efficiency indications for the users that the lighting conditions within the operating environment of the mobile terminal 200 are poor, i.e. below the recommended lighting conditions and may cause direct or indirect unhealthy consequences for the user of the mobile terminal 200 at least in the long term. Thus, also it may cause increase in the efficiency of the consequences of the at least one control function, i.e. actions provided by the user to return the at least one lighting value within the predefined limits again. Alternatively or in addition, combining multiple indications and/or instructions may increase the cause and effect relationship of the at least one control function. For example, a first control function comprising an instruction for the mobile terminal 200 itself to slow down at least one function of the mobile terminal 200 and a second control function comprising an indication via an output device of the mobile terminal for the user that the at least one lighting value deviates from pre-defined limits may be generated in order to improve the efficiency of indication for the user. Moreover, it makes the reason behind the slowing down or switching off the at least one function of the mobile terminal 200 clearer. In case more than one control functions is generated, the control functions may be generated simultaneously or consecutively.

Figure 4 illustrates another example of the method according to the invention, wherein the obtained mobile terminal related data and lighting related data may be stored 402 together with time-based location of the mobile terminal at the observation time in the memory of the mobile terminal 200. In response to detecting that the defined at least one lighting value deviates from pre-defined limits, the method may further comprise defining 404 a location that has better lighting conditions than the lighting conditions of the current location of the mobile terminal 200 based on the mobile terminal related data and lighting related data together with time-based location of the mobile terminal 200 stored in the memory of the mobile terminal. In that case, the control function may comprise an instruction via an output device of the mobile terminal, e.g. screen, speaker, etc., for the user of the mobile terminal 200 to move to the defined location that has better lighting conditions. This enables that the mobile terminal related data, lighting related data, and time-based location of the mobile terminal at the observation time stored to its memory previously, i.e. historical data, may be utilized to define a location having satisfactory lighting conditions, when the mobile terminal 200 is used within the same environment subsequently and the mobile terminal 200 detects that at least one lighting value deviates from the pre-defined limits. In other words, the this enables learning of the lighting conditions in different operating environments of the mobile terminal 200 at different times of the day and/or the year. Better lighting conditions may be such that the at least one lighting value is within the pre-defined limits. The time-based location of the mobile terminal 200 means the location of the mobile terminal 200 at a certain moment of time.

The mobile terminal 200 may be connected to a lighting control system of a building. The lighting control system may be a system configured to control the lighting conditions of the building. The lighting control system may comprise one or more controllers for monitoring and controlling one or more lighting devices, such as luminaires, individually by means of a one-directional or a bi-directional data exchange between the one or more lighting devices and the one or more controllers. Furthermore, the data exchange between the mobile terminal 200 and one or more lighting devices and/or between the mobile terminal 200 and the one or more controllers of the lighting control system may be one-directional or a bi-directional. The lighting control system may further comprise one or more sensors, e.g. presence sensors, humidity sensors, temperature sensors, CO₂ sensors, etc., for providing data to be used in the controlling of the lighting conditions.

According to one embodiment, at least one control function generated in response to detecting that at least one lighting value deviates from the predefined limits may be generated for the lighting control system of a building. The at least one control function may comprise instruction for the lighting control system to adjust ambient lighting conditions, e.g. light temperature of the ambient light, amount of the ambient light, spectrum of the ambient light etc., in order to improve the lighting conditions within the environment of the mobile terminal 200. For example, if the mobile terminal 200 detects that at least one lighting value deviates from the pre-defined limits, it may provide for the lighting control system a control function comprising an instruction to adjust ambient lighting conditions.

Alternatively or in addition, the mobile terminal 200 may receive from the lighting control system lighting related data. The lighting related data received from the lighting control system may comprise at least one of the following: lighting level data at different locations within the building, presence data at different locations within the building, spectrum of the light. The lighting related data received from the lighting control system may be used to define at least one lighting value representing incident light at an observation location 302 as described above. Alternatively or in addition, the lighting related data received from the lighting control system may be used to define a location of the mobile terminal 200 that has better lighting conditions than the lighting conditions of the current location of the mobile terminal 200 and the control function may comprise an instruction via an output device of the mobile terminal, e.g. screen, speaker, etc., for the user of the mobile terminal 200 to move to the defined location that has better lighting conditions as discussed above. Alternatively or in addition, the lighting related data received from the lighting control system may be used to define a position of the mobile terminal 200 that has better lighting conditions than the lighting conditions of the current position of the mobile terminal 200 and the control function may comprise an instruction via an output device of the mobile terminal, e.g. screen, speaker, etc., for the user of the mobile terminal 200 to change the position of the mobile terminal 200 into the defined position that in which lighting conditions are better. Alternatively or in addition, the mobile terminal 200 may receive from the lighting control system one or more building related parameters obtained from one or more sensors of the lighting control system. The one or more building related parameters may comprise e.g. temperature, humidity, CO₂, number of other people inside the building, directions of the movements of other people inside the building, number of movements of other people inside the building. The one or more building related parameters may be used to define a location of the mobile terminal 200 that has better lighting conditions than the lighting conditions of the current location of the mobile terminal 200 and the control function may comprise an instruction via an output device of the mobile terminal, e.g. screen, speaker, etc., for the user of the mobile terminal 200 to move to the defined location that has better lighting conditions as discussed above.

According to one example, the mobile terminal 200 may further obtain user related data from one or more wearable sensor devices communicatively connected to the mobile terminal 200. In order to provide the user related data of the user of the mobile terminal 200, the one or more wearable sensor devices may be worn by the user of the mobile terminal 200. The user related data may comprise value representing cardiac stress of the user, e.g. heart rate variability (HRV) or HRV2 indicator. HRV defines the variations in the time intervals between adjacent heartbeats. HRV2 is an indicator of nervous system (sympathetic and parasympathetic) capacity to produce an effort. Some non-limiting examples of wearable sensor devices may be smartwatch, smart ring or similar. The method may further comprise defining a location having better lighting conditions than the lighting conditions of the current location of the mobile terminal 200 based on the obtained user related data together with the obtained mobile terminal related data, lighting related data, and/or the time-based location of the mobile terminal at the observation time. The generated at least one control function may comprise an instruction via an output device of the mobile terminal 200, e.g. screen, speaker, etc., for the user of the mobile terminal 200 to move to the defined location having better lighting conditions. In this case, the better lighting conditions may be such that the at least one lighting value is within the pre-defined limits and/or one or more building related parameters, e.g. temperature, humidity, CO₂, etc., are adjusted to maintain or restore a balanced cardiac stress level of the user of the mobile terminal 200. Alternatively or in addition, the generated at least one control function may comprise instruction for the lighting control system to adjust ambient lighting conditions and/or one or more building related parameters to maintain or restore a balanced cardiac stress level of the user of the mobile terminal 200.

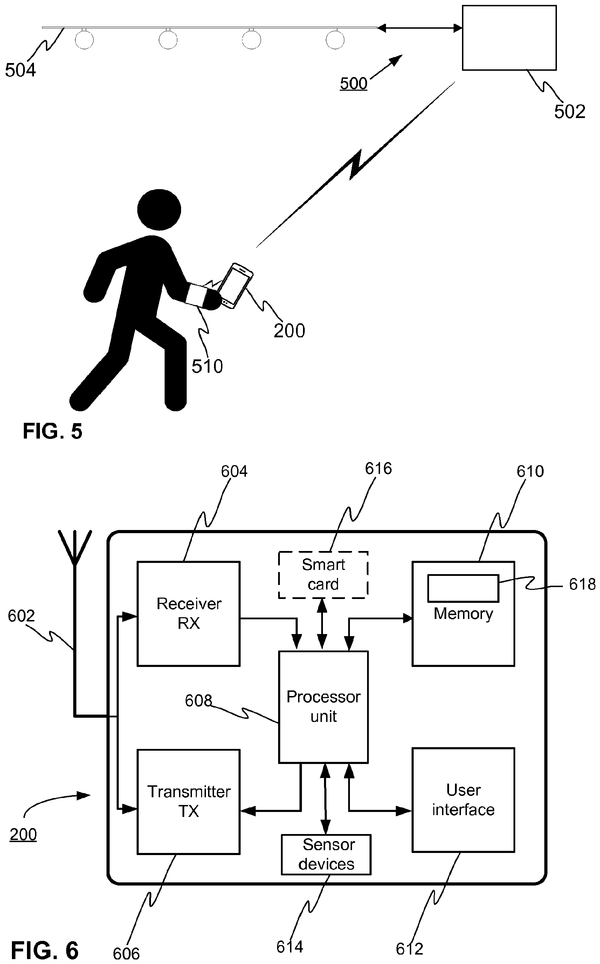

Figure 5 illustrates a simplified non-limiting example of an environment, wherein the embodiments of the invention may be implemented. In this example environment, the mobile terminal 200 is connected to a lighting control system 500 of a building and to a wearable sensor device 510 worn by the user of the mobile terminal 200. The invention is not limited to that and the mobile terminal does not have to be connected to either of the lighting control system 500 or to the wearable sensor device 510 as described above. The mobile terminal may also be connected only to one of the lighting control system 500 or the wearable sensor device 510. The example lighting control system comprises a controller 502 and a plurality of lighting devices 504. According to one non-limiting example, if the mobile terminal 200 detects that at least one lighting value deviates from the pre-defined limits, it may provide for the lighting control system 500 a control function comprising an instruction to adjust ambient lighting conditions, e.g. by adjusting the light temperature of the plurality of lighting devices 504, amount of the light originating from the plurality of lighting devices 504, spectrum of the light originating from the plurality of lighting devices 504 etc., as discussed above. According to another non-limiting example, the mobile terminal 200 may obtain lighting related data from the lighting control system 500 and/or user related data from the wearable sensor device 510 and generate at least one control function as discussed above in order to optimize the lighting conditions within the operating environment of the mobile terminal 200.

Figure 6 illustrates an example of a mobile terminal 200 relating to the invention. The mobile terminal 200 may comprise one or more antennas 602; one or more receivers 604; one or more transmitters 606; one or more processors 608; one or more memories 610; one or more user interface units 612; one or more sensor devices 614, e.g. GPS unit, ambient light sensor, acceleration sensor, magnetometer, gyroscope, camera, etc.; one or more smart cards 616, e.g. SIM. The one or more receivers 604 and one or more transmitters 606 are configured to provide communication via the one or more antennas 602 with any other external device and/or systems, such as the light control system and/or one or more wearable sensor devices. The communication may be based on any know wireless communication technologies, such as mobile or cellular communication technology, e.g. 3G, 4G or 5G, Bluetooth, Wi-Fi, and/or NFC. The one or more user interface units 612 may comprise one or more I/O devices, i.e. input/output devices. Some non-limiting examples of the I/O devices of the mobile terminal 200 may be one or more buttons, one or more keyboards, one or more microphones, one or more displays, one or more touch screens, one or more speakers, one or more sensors either alone or in combination with others.

The implementation of the method according to the present invention as described above may be arranged so that computer program code, i.e. application software, 618 comprising one or more sets of machine-readable instructions is stored in the memory 610 of the mobile terminal 200 and when the computer program code 618 is executed by the one or more processors 608, the mobile terminal 200 is caused to perform one or more method steps described above.

The specific examples provided in the description given above should not be construed as limiting the applicability and/or the interpretation of the appended claims. Lists and groups of examples provided in the description given above are not exhaustive unless otherwise explicitly stated.

## Claims

1. A method for optimizing lighting conditions within an operating environment of a mobile terminal (200), comprising:
obtaining (102) mobile terminal related data and lighting related data from one or more sensor devices of the mobile terminal (200),
defining (104) at least one lighting value representing incident light at an observation location (302) representing a location of the eyes of a user of the mobile terminal (200) based on the obtained mobile terminal related data and lighting related data,
comparing (106) the defined at least one lighting value to pre-defined limits, and
generating (108) at least one control function, in response to detecting that at least one lighting value deviates from the pre-defined limits.

2. The method according to claim 1, wherein the lighting related data comprises at least one of the following: amount, color temperature and/or illuminance of light reaching a first side (202) of the mobile terminal (200); amount, color temperature and/or illuminance of light reaching a second side (208) of the mobile terminal (200) being opposite to the first side (202).

3. The method according to any of claims 1 or 2, wherein the mobile terminal related data comprises at least one of the following: position of the mobile terminal (200), location of the mobile terminal (200), distance from the mobile terminal (200) to the observation location (302), brightness of a screen (204) of the mobile terminal (200), spectrum of light originating from a screen (204) of the mobile terminal (200).

4. The method according to any of the preceding claims, wherein the at least one lighting value is at least one of the following: total amount of incident light, amount of incident light originating from a screen (204) of the mobile terminal (200), amount of incident light originating from the ambient of the mobile terminal (200), spectrum of incident light, balance of incident light between light originating from a screen (204) of the mobile terminal (200) and light originating from the ambient of the mobile terminal (200).

5. The method according to any of the preceding claims, wherein the control function comprises an instruction for the mobile terminal (200) itself to slow down at least one function of the mobile terminal (200).

6. The method according to any of the preceding claims, wherein the control function comprises an instruction for the mobile terminal (200) itself to switch off at least one function of the mobile terminal (200).

7. The method according to any of the preceding claims, wherein the control function comprises an indication via an output device of the mobile terminal (200) for the user that the at least one lighting value deviates from pre-defined limits.

8. The method according to any of the preceding claims, wherein the control function comprises an instruction via an output device of the mobile terminal (200) for the user to adjust the lighting conditions within the operating environment of the mobile terminal (200).

9. The method according to any of the preceding claims, further comprising storing (402) the obtained mobile terminal related data and lighting related data together with time-based location of the mobile terminal (200) at the observation time.

10. The method according to claim 9, further comprising, in response to detecting that the defined at least one lighting value deviates from pre-defined limits, defining (404) a location having better lighting conditions based on the stored mobile terminal related data and lighting related data together with time-based location of the mobile terminal (200), and
the control function comprises an instruction via an output device of the mobile terminal (200) for the user to move to the defined location having better lighting conditions.

11. The method according to any of the preceding claims, wherein the control function is generated for a lighting control system (500) of a building and comprises instruction to adjust ambient lighting conditions.

12. The method according to claim 11, further comprising receiving from the lighting control system (500) lighting related data comprising at least one of the following: lighting level data at different locations within the building, presence data at different locations within the building, spectrum of the light.

13. A computer program product (618) comprising one or more sets of machine-readable instructions that, when executed by one or more processors (608) of a mobile terminal (200), are configured to cause:
obtaining mobile terminal related data and lighting related data,
defining at least one lighting value representing incident light at an observation location (302) representing a location of the eyes of a user of the mobile terminal (200) based on the obtained mobile terminal related data and lighting related data,
comparing the defined at least one lighting value to pre-defined limits, and
generating at least one control function, in response to detecting that at least one lighting value deviates from the pre-defined limits.

14. A mobile terminal (200) comprising:
one or more sensor devices for obtaining mobile terminal related data and lighting related data,
one or more processors (610), and
one or more memories (610) comprising computer program code (618),
wherein the one of more memories (601) and the computer program code (618) are configured to, with the one or more processors (608), cause the mobile terminal (200) to perform:
define at least one lighting value representing incident light at an observation location (302) representing a location of the eyes of a user of the mobile terminal (200) based on the obtained mobile terminal related data and lighting related data,
compare the defined at least one lighting value to pre-defined limits, and
generate at least one control function, in response to detecting that at least one lighting value deviates from the pre-defined limits.
